# EUROPÄISCHE PATENTSCHRIFT

(11) **EP 3 727 912 B1**
(45) Veröffentlichungstag und Bekanntmachung des Hinweises auf die Patenterteilung: **20.03.2024**
(21) Anmeldenummer: 18800574.8
(22) Anmeldetag: 06.11.2018
(51) Int. Cl.: B60H 1/32, B60K 1/00, F02B 67/04

(54) **VORRICHTUNG ZUR LAGERUNG EINES KLIMAKOMPRESSORS**
DEVICE FOR MOUNTING AN AIR-CONDITIONING COMPRESSOR
DISPOSITIF DE SUPPORT D'UN COMPRESSEUR DE CLIMATISATION

(30) Priorität: 20.12.2017 DE 102017223425
(43) Veröffentlichungstag der Anmeldung: 28.10.2020
(73) Patentinhaber: Audi AG, 85045 Ingolstadt (DE)
(72) Erfinder: ALBL, Sebastian, 85080 Gaimersheim (DE); SCHREINER, Manuel, 94556 Neuschönau (DE); BUJAK, Marek, 91809 Wellheim (DE)
(86) Internationale Anmeldenummer: PCT/EP2018/080365
(87) Internationale Veröffentlichungsnummer: WO 2019/120732

(56) Entgegenhaltungen:
- CN-U- 205 714 652
- DE-A1-102005 023 830
- DE-A1-102007 026 030
- DE-A1-102012 111 967
- JP-A- 2014 008 793

## Beschreibung

Die Erfindung betrifft ein Kraftfahrzeug mit einer Karosserie, mit wenigstens zwei Achsen, von denen wenigstens eine eine angetriebene Achse ist, und mit einer Vorrichtung zur Lagerung eines Klimakompressors an der Karosserie.

Ein Kraftfahrzeug mit einer Karosserie ist aus der DE 10 2009 015 414 A1 bekannt. Mit der dort beschriebenen Vorrichtung zur Lagerung des Klimakompressors an der Karosserie des Kraftfahrzeugs sollen ein Elektromotor und ein damit zusammenwirkendes Getriebe möglichst kompakt und in einfacher Weise im Fahrzeug montiert werden können.

Die CN 205 714 652 U beschreibt eine Klimakompressorhalterung für ein Fahrzeug. Dabei ist ein vorderes Ende eines Halterungskörpers der Kompressorhalterung der Klimaanlage mit einer Verbindungsstruktur zum Verbinden mit dem Motor versehen, und das hintere Ende ist mit einem Klimaanlagenkompressor-Montageabschnitt zum Verbinden mit dem Klimaanlagenkompressor versehen.

Die JP 2014 008793 A beschreibt eine weitere Halterung für einen Klimakompressor.

Die DE 10 2005 023 830 A1 betrifft eine Vorrichtung zur Montage eines über einen Antriebsriemen durch einen Motor antreibbaren Klimakompressors im Motorraum eines Kraftfahrzeugs.

Üblicherweise werden elektrische Klimakompressoren beispielsweise an einem Elektromotor befestigt, wobei hierzu eine akustische Schwingungsentkopplung zwischen dem Klimakompressor und dem Elektromotor vorgesehen ist. Der Elektromotor wird dann an der Karosserie des Kraftfahrzeugs befestigt.

Insbesondere wenn der Elektromotor mittels einer Vierpunktlagerung mit der Karosserie verbunden wird, nehmen die Aggregatelager bzw. -stützen viel Bauraum ein, wodurch die Unterbringung des elektrischen Klimakompressors erschwert wird. Dies führt häufig dazu, dass die Aggregatestützen stark beschnitten werden müssen. Der ungünstige Bauraum der Aggregatestützen bedingt außerdem den Einsatz von viel Gewicht, um die erforderliche Steifigkeit der Stützen überhaupt darstellen zu können.

Ein weiterer erheblicher Nachteil der bekannten Lösungen besteht darin, dass bei Fahrzeugen mit lediglich einer angetriebenen Achse innerhalb einer Baureihe, in der auch Fahrzeuge mit zwei angetriebenen Achsen existieren, ein an der nicht angetriebenen Achse verbauter Klimakompressor in alternativer Weise mit dem Kraftfahrzeug verbunden werden muss.

Es ist daher Aufgabe der vorliegenden Erfindung, ein Kraftfahrzeug mit einer Karosserie und mit wenigstens zwei Achsen sowie einer Vorrichtung zur Lagerung eines Klimakompressors an der Karosserie des Kraftfahrzeugs zu schaffen, die bei unterschiedlichsten Ausführungen von Kraftfahrzeugen universell eingesetzt werden kann.

Erfindungsgemäß wird diese Aufgabe durch die in Anspruch 1 genannten Merkmale gelöst.

Durch die Lagerung des Antriebsaggregats mittels wenigstens zweier weiterer Lagerelemente an der Karosserie, wenn die Halteeinrichtung an einer angetriebenen Achse des Kraftfahrzeugs angeordnet ist, ergibt sich eine erhebliche Erhöhung der Steifigkeit der Anbindung des Klimakompressors und der zur Lagerung des Klimakompressors und insbesondere des Antriebsaggregats eingesetzter Lagerelemente.

Die erfindungsgemäße Lösung trägt außerdem zur Gewichts- und Kostenreduktion bei, was letztendlich die Einsparung von Kraftstoff bzw. allgemein von für den Antrieb des Kraftfahrzeugs eingesetzter Energie ermöglicht. Auch bezüglich des erforderlichen Bauraums stellt die erfindungsgemäße Vorrichtung eine besonders vorteilhafte Lösung dar.

Wenn die Halteeinrichtung an einer nicht angetriebenen Achse des Kraftfahrzeugs angeordnet und lediglich der Klimakompressor an der Halteeinrichtung angebracht ist, ergibt sich eine sehr einfach auszuführende Vorrichtung, die zu einer Verringerung der Masse des Kraftfahrzeugs führt. Die erfindungsgemäße Lösung ermöglicht es außerdem, den Klimakompressor bei einem Fahrzeug derselben Baureihe stets an derselben Achse anzubringen, unabhängig davon, ob die Achse angetrieben ist oder nicht.

Wenn in einer vorteilhaften Ausgestaltung der Erfindung zwischen dem Antriebsaggregat und den Lagerelementen Entkopplungselemente angeordnet sind, so ergibt sich eine besonders gute Lagerung des Antriebsaggregats.

Um die Steifigkeit der gesamten Vorrichtung und insbesondere der Lagerung des Klimakompressors und gegebenenfalls des Antriebsaggregats zu erhöhen, kann des Weiteren vorgesehen sein, dass die Halteeinrichtung auf beiden Seiten der Karosserie an derselben gelagert ist.

In einer vereinfachten Ausführung ist es jedoch auch möglich, die Halteeinrichtung an lediglich einer Seite der Karosserie gelagert ist.

Die erfindungsgemäße Vorrichtung lässt sich besonders vorteilhaft einsetzen, wenn das Antriebsaggregat ein Elektromotor ist.

Hierbei kann die erfindungsgemäße Vorrichtung besonders vorteilhaft eingesetzt werden, wenn lediglich eine Achse des Kraftfahrzeugs angetrieben ist.

Insbesondere ist ein vorteilhafter Einsatz der erfindungsgemäßen Vorrichtung möglich, wenn lediglich die Hinterachse des Kraftfahrzeugs angetrieben ist, da in diesem Fall aufgrund der erfindungsgemäßen Lösung der Klimakompressor auch weiterhin an der Vorderachse verbaut werden kann.

Es ist jedoch auch möglich, die erfindungsgemäße Vorrichtung einzusetzen, wenn wenigstens zwei Achsen des Kraftfahrzeugs angetrieben sind.

Nachfolgend sind Ausführungsbeispiele der Erfindung anhand der Zeichnung prinzipmäßig dargestellt.

Es zeigt:
- Fig. 1: eine erste Konfiguration eines erfindungsgemäßen Kraftfahrzeugs;
- Fig. 2: eine zweite Konfiguration des erfindungsgemäßen Kraftfahrzeugs;
- Fig. 3: eine erste Ausführungsform einer Vorrichtung zur Lagerung eines Klimakompressors an der Karosserie des Kraftfahrzeugs;
- Fig. 4: eine zweite Ausführungsform der Vorrichtung zur Lagerung des Klimakompressors an der Karosserie des Kraftfahrzeugs;
- Fig. 5: eine dritte Ausführungsform der Vorrichtung zur Lagerung des Klimakompressors an der Karosserie des Kraftfahrzeugs;
- Fig. 6: eine vierte Ausführungsform der Vorrichtung zur Lagerung des Klimakompressors an der Karosserie des Kraftfahrzeugs; und
- Fig. 7: eine detaillierte Darstellung der Halteeinrichtung der erfindungsgemäßen Vorrichtung.

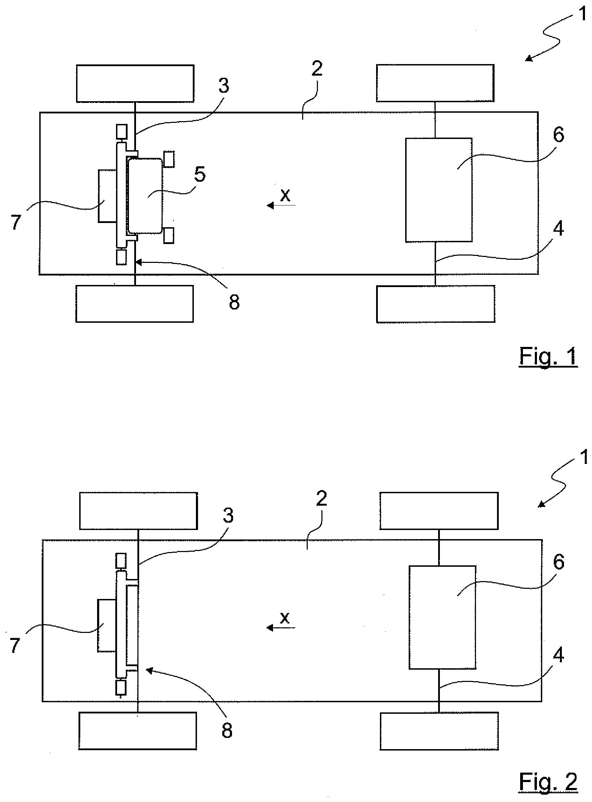

Fig. 1 zeigt eine erste Konfiguration eines Kraftfahrzeugs 1, das eine Karosserie 2 und zwei Achsen 3 und 4, nämlich eine Vorderachse 3 und eine Hinterachse 4, aufweist. Die Fahrtrichtung "x" des Kraftfahrzeugs 1 ist in sämtlichen Figuren mittels eines entsprechend bezeichneten Pfeils angegeben. In der in Fig. 1 dargestellten Konfiguration sind beide Achsen 3 und 4 angetrieben, d.h. es handelt sich um ein vierradgetriebenes Kraftfahrzeug 1. Dabei ist zum Antrieb der Vorderachse 3 ein erstes Antriebsaggregat 5 und zum Antrieb der Hinterachse 4 ein zweites Antriebsaggregat 6 vorgesehen. Im vorliegenden Fall handelt es sich bei beiden Antriebsaggregaten 5 und 6 jeweils um Elektromotoren. Des Weiteren ist in dem Kraftfahrzeug 1 ein Klimakompressor 7 gelagert, und zwar mittels einer nachfolgend ausführlich beschriebenen Vorrichtung 8, die somit zur Lagerung des Klimakompressors 7 an der Karosserie 2 des Kraftfahrzeugs 1 dient. Die Vorrichtung 8 ist dabei der Vorderachse 3 zugeordnet.

In Fig. 2 ist eine weitere Konfiguration des Kraftfahrzeugs 1 beschrieben. Dieses weist wie das Kraftfahrzeug 1 aus Fig. 1 die Karosserie 2, die Vorderachse 3 und die Hinterachse 4 auf. In diesem Fall ist jedoch lediglich die Hinterachse 4 mittels des zweiten Antriebsaggregats 6 angetrieben, wohingegen das bei Fig. 1 an der Vorderachse 3 eingesetzte erste Antriebsaggregat 5 nicht vorhanden ist. Dennoch wird der Klimakompressor 7 mittels der auch hier vorhandenen Vorrichtung 8 an der Karosserie 2 gelagert, wobei die Halteeinrichtung 9 an der nicht angetriebenen Vorderachse 3 angeordnet ist und lediglich der Klimakompressor 7 an der Halteeinrichtung 9 angebracht ist. Die Vorrichtung 8 kann hierzu im Prinzip identisch zu der Vorrichtung 8 gemäß Fig. 1 ausgeführt sein. Da das erste Antriebsaggregat 5 bei der Konfiguration von Fig. 2 nicht vorhanden ist, kann auf bestimmte, in Bezug auf Fig. 2 nicht näher beschriebene Schnittstellen zwischen der Vorrichtung 8 und dem ersten Antriebsaggregat 5 verzichtet werden.

Durch die Vorrichtung 8 ist es also möglich, den Klimakompressor 7 bei einem Fahrzeug derselben Baureihe stets an derselben Achse 3 bzw. 4 anzubringen, unabhängig davon, ob die Achse 3 bzw. 4 angetrieben ist oder nicht. Die Vorrichtung 8 ist in den dargestellten Konfigurationen jeweils der Vorderachse 3 zugeordnet. Es wäre jedoch auch möglich, die Vorrichtung 8 jeweils der Hinterachse 3 zuzuordnen. Dies gilt insbesondere, jedoch nicht ausschließlich, wenn lediglich die Vorderachse 3 des Kraftfahrzeugs 1 angetrieben wird.

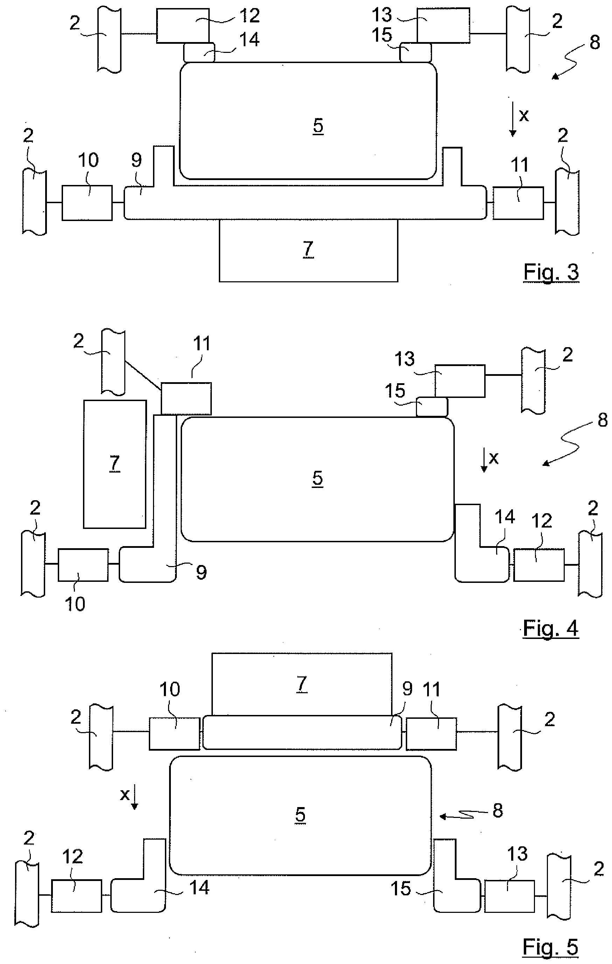

In den Figuren 3 bis 6 sind verschiedene Ausführungsformen der Vorrichtung 8 sehr prinzipmäßig dargestellt. Hierbei ist jeweils das erste Antriebsaggregat 5 an der Vorderachse 3 vorhanden. Es ist jedoch bei jeder einzelnen der nachfolgend beschriebenen Ausführungsformen der Vorrichtung 8 problemlos möglich, auf den Anbau des ersten Antriebsaggregats 5 an die Vorrichtung 8 zu verzichten, wie dies in analoger Weise aus einem Vergleich der Figuren 1 und 2 hervorgeht.

Fig. 3 zeigt die bereits in Fig. 1 dargestellte Ausführungsform der Vorrichtung 8 zur Lagerung des Klimakompressors 7 an der Karosserie 2 des Kraftfahrzeugs 1. Die Vorrichtung 8 weist eine Halteeinrichtung 9 auf, die mittels zweier Lagerelemente 10 und 11 an der in Fig. 3 lediglich angedeuteten Karosserie 2 des Kraftfahrzeugs 1 gelagert ist. Die Verbindung zwischen den Lagerelementen 10 und 11 und der Karosserie 2 ist dabei lediglich angedeutet. Bei der Ausführungsform von Fig. 3 ist die Halteeinrichtung 9 auf beiden Seiten der Karosserie 2 an derselben gelagert. An der Halteeinrichtung 9 ist der Klimakompressor 7 angebracht. Des Weiteren ist an der Halteinrichtung 9 das erste Antriebsaggregat 5, das zum Antrieb der Vorderachse 3 des Kraftfahrzeugs 1 dient, angebracht. Auf der der Halteeinrichtung 9 gegenüberliegenden Seite ist das erste Antriebsaggregat mittels zweier weiterer Lageelemente 12 und 13 an der Karosserie 2 gelagert. Auch die Verbindung zwischen den Lagerelementen 10 und 11 und der Karosserie 2 ist dabei lediglich angedeutet. Um eine Schwingungsentkopplung des ersten Antriebsaggregats 5 von der Karosserie 2 zu erreichen, sind zwischen dem ersten Antriebsaggregat 5 und den beiden Lagerelementen 12 und 13 jeweilige Entkopplungselemente 14 und 15 vorgesehen, die auch als Motorstützen bezeichnet werden können.

Eine alternative Ausführungsform der Vorrichtung 8 ist in Fig. 4 dargestellt. Hierbei ist die Halteeinrichtung 9 lediglich an einer Seite der Karosserie 2 gelagert, und zwar wiederum mittels der beiden Lagerelemente 10 und 11. Das erste Antriebsaggregat 5 ist dagegen auf der anderen Seite der Karosserie 2 gelagert, wozu wiederum die beiden Lagerelemente 12 und 13 eingesetzt werden. Wie bei der Ausführungsform von Fig. 3 sind auch hier die beiden Entkopplungselemente 14 und 15 zwischen dem ersten Antriebsaggregat 5 und den Lagerelementen 12 und 13 vorgesehen. An der Halteeinrichtung 9 ist wiederum der Klimakompressor 7 auf der einen und das erste Antriebsaggregat 5 auf der anderen Seite vorgesehen.

Da die Lagerelemente 10 und 11 sowie die Lagerelemente 12 und 13 und die mit denselben verbundenen Entkopplungselemente 14 und 15 bei jeder hierin beschriebenen Ausführungsform im Prinzip dieselbe Funktion übernehmen und lediglich an anderen Positionen verbaut sind, könnten diese jeweils auch mit dem anderen, entsprechenden Bezugszeichen versehen sein.

Bei der Ausführungsform der Vorrichtung 8 gemäß Fig. 5 sind die Seiten, auf denen das erste Antriebsaggregat 5 bzw. der Klimakompressor 7 an der Halteeinrichtung 9 angebracht sind, gegenüber der Ausführungsform von Fig. 3 vertauscht. Dies kann beispielsweise aus Gründen des vorhandenen Bauraums vorteilhaft sein. Ansonsten ist auch hier die Halteeinrichtung 9 mittels der Lagerelemente 10 und 11 an beiden Seiten der Karosserie 2 gelagert. An der Halteeinrichtung 5 sind, wie erwähnt, das erste Antriebsaggregat 5 und der Klimakompressor 7 angebracht. Das erste Antriebsaggregat 5 ist mittels der Lagerelemente 12 und 13 an der Karosserie 2 gelagert, wobei auch hier die Entkopplungselemente 14 und 15 vorgesehen sind.

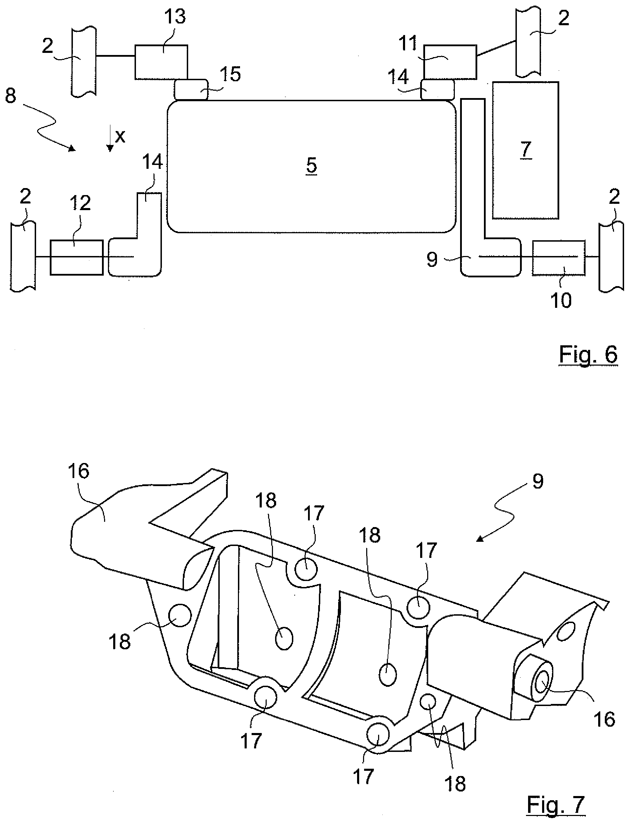

Die in Fig. 6 dargestellte Ausführungsform ist im Prinzip spiegelbildlich zu derjenigen von Fig. 4, d.h. die Halteeinrichtung 9 ist lediglich an einer Seite der Karosserie 2 gelagert und das erste Antriebsaggregat 5 ist auf der anderen Seite der Karosserie 2 gelagert.

In Fig. 7 ist die Halteeinrichtung 9 detaillierter dargestellt und es sind Anbindungspunkte 16 derselben zu den Lagerelementen 10 und 11 zu erkennen. An diesen Anbindungspunkten 16, die vorzugsweise als elastische Lager ausgebildet sind, können demnach die Lagerelemente 10 und 11 und damit die Halteeinrichtung 9 an der Karosserie 2 angebracht werden. Des Weiteren sind Anbindungspunkte 17 zur Anbringung des Klimakompressors 7 an der Halteeinrichtung 9 dargestellt. Bei den Anbindungspunkten 17 kann es sich zum Beispiel um Gummielemente mit Schraubhülsen handeln, wodurch leichte Bewegungen des Klimakompressors ermöglicht werden. Die sich auf diese Weise ergebende Entkopplung führt zu akustischen Vorteilen, da weniger Störfrequenzen auftreten. Gemeinsam mit den Anbindungspunkten 16 ergibt sich dadurch eine doppelte akustische Entkopplung des Klimakompressors 7. Schließlich zeigt Fig. 7 auch mehrere Anbindungspunkte 18 zur Anbringung des ersten Antriebsaggregats 5 an der Halteeinrichtung 9. Die Halteeinrichtung 9 ist vorzugsweise starr an dem Antriebsaggregat 5 angebunden, was die Steifigkeit des gesamten Systems bzw. der gesamten Vorrichtung 8 erhöht.

## Patentansprüche

1. Kraftfahrzeug (1) mit einer Karosserie (2), mit wenigstens zwei Achsen (3,4), von denen wenigstens eine eine angetriebene Achse (3,4) ist, und mit einer Vorrichtung (8) zur Lagerung eines Klimakompressors (7) an der Karosserie (2), mit einer Halteeinrichtung (9), die mittels wenigstens zweier Lagerelemente (10,11) an der Karosserie (2) gelagert ist und an der der Klimakompressor (7) angebracht ist, wobei die Halteeinrichtung (9) an einer der Achsen (3,4) des Kraftfahrzeugs (1) angeordnet ist, wobei, wenn die Halteeinrichtung (9) an einer angetriebenen Achse (3,4) des Kraftfahrzeugs (1) angeordnet ist, zusätzlich zu dem Klimakompressor (7) ein Antriebsaggregat (5) des Kraftfahrzeugs (1) an der Halteeinrichtung (9) angebracht ist und das Antriebsaggregat (5) mittels wenigstens zweier weiterer Lagerelemente (12,13) an der Karosserie (2) gelagert ist, und wobei, wenn die Halteeinrichtung (9) an einer nicht angetriebenen Achse (3) des Kraftfahrzeugs (1) angeordnet ist, lediglich der Klimakompressor (7) an der Halteeinrichtung (9) angebracht ist, sodass der Klimakompressor (7) bei einem Fahrzeug derselben Baureihe stets an derselben Achse (3) angebracht ist, unabhängig davon, ob die Achse (3) angetrieben ist oder nicht.

2. Kraftfahrzeug nach Anspruch 1,
**dadurch gekennzeichnet, dass**
zwischen dem Antriebsaggregat (5) und den Lagerelementen (12,13) Entkopplungselemente (14,15) angeordnet sind.

3. Kraftfahrzeug nach Anspruch 1 oder 2,
**dadurch gekennzeichnet, dass**
die Halteeinrichtung (9) auf beiden Seiten der Karosserie (2) an derselben gelagert ist.

4. Kraftfahrzeug nach Anspruch 1 oder 2,
**dadurch gekennzeichnet, dass**
die Halteeinrichtung (9) an lediglich einer Seite der Karosserie (2) an derselben gelagert ist.

5. Kraftfahrzeug nach einem der Ansprüche 1 bis 4,
**dadurch gekennzeichnet, dass**
das Antriebsaggregat (5) ein Elektromotor ist.

6. Kraftfahrzeug nach einem der Ansprüche 1 bis 5,
**dadurch gekennzeichnet, dass**
lediglich eine Achse (4) des Kraftfahrzeugs angetrieben ist.

7. Kraftfahrzeug nach einem der Ansprüche 1 bis 6,
**dadurch gekennzeichnet, dass**
lediglich die Hinterachse (4) des Kraftfahrzeugs angetrieben ist.

8. Kraftfahrzeug nach Anspruch 1,
**dadurch gekennzeichnet, dass**
wenigstens zwei Achsen (3,4) des Kraftfahrzeugs angetrieben sind.

## Claims

1. Motor vehicle (1) having a body (2), having at least two axles (3, 4), of which at least one is a driven axle (3, 4), and having a device (8) for mounting an air conditioning compressor (7) on the body (2), having a holding apparatus (9) which is mounted on the body (2) by means of at least two bearing elements (10, 11) and to which the air conditioning compressor (7) is attached, wherein the holding apparatus (9) is arranged on one of the axles (3, 4) of the motor-vehicle (1), in addition to the air conditioning compressor (7) a drive unit (5) of the motor vehicle (1) is attached to the holding apparatus (9) and the drive unit (5) is mounted on the body bracket 2) by means of at least two further bearing elements (12, 13), and wherein, when the holding apparatus (9) is arranged on a non-driven axle (3) of the motor vehicle (1), only the air conditioning compressor (7) is attached to the holding apparatus (9), such that the air conditioning compressor (7) is always attached to the same axle (3) in the case of a vehicle of the same vehicle series, independently of whether the axle (3) is driven or non-driven.

2. Motor vehicle according to claim 1,
**characterized in that**
between the drive unit (5) and the bearing elements (12, 13) are arranged decoupling elements (14, 15).

3. Motor vehicle according to claim 1 or 2,
**characterized in that**
the holding apparatus (9) on both sides of the body (2) is mounted on the same.

4. Motor vehicle according to claim 1 or 2,
**characterized in that**
the holding apparatus (9) on only one side of the body (2) is mounted on the same.

5. Motor vehicle according to any of claims 1 to 4,
**characterized in that**
the drive unit (5) is an electric motor.

6. Motor vehicle according to any of claims 1 to 5,
**characterized in that**
only one axle (4) of the motor vehicle is driven.

7. Motor vehicle according to any of claims 1 to 6,
**characterized in that**
only the rear axle (4) of the motor vehicle is driven.

8. Motor vehicle according to claim 1,
**characterized in that**
at least two axles (3, 4) of the motor vehicle are driven.

## Revendications

1. Véhicule automobile (1) avec une carrosserie (2), avec au moins deux essieux (3,4), dont au moins un est un essieu entraîné (3,4), et avec un dispositif (8) pour le support d'un compresseur de climatisation (7) sur la carrosserie (2), avec un appareil de maintien (9) qui est monté au moyen d'au moins deux éléments de palier (10,11) sur la carrosserie (2) et sur lequel le compresseur de climatisation (7) est fixé, dans lequel l'appareil de maintien (9) est disposé sur un des essieux (3,4) du véhicule automobile (1), dans lequel, lorsque l'appareil de maintien (9) est disposé sur un essieu entraîné (3,4) du véhicule automobile (1), en plus du compresseur de climatisation (7), un groupe d'entraînement (5) du véhicule automobile (1) est fixé sur l'appareil de maintien (9) et l'agrégat d'entraînement (5) est monté sur la carrosserie (2) au moyen d'au moins deux éléments de palier supplémentaires (12,13), et dans lequel, lorsque l'appareil de maintien (9) est disposé sur un essieu non entraîné (3) du véhicule automobile (1), seul le compresseur de climatisation (7) est fixé sur l'appareil de maintien (9), de sorte que le compresseur de climatisation (7) est toujours fixé sur le même essieu (3) pour un véhicule de la même série, indépendamment du fait que l'essieu (3) soit entraîné ou non.

2. Véhicule automobile selon la revendication 1,
**caractérisé en ce que**
des éléments de découplage (14,15) sont disposés entre l'agrégat d'entraînement (5) et les éléments de palier (12,13).

3. Véhicule automobile selon la revendication 1 ou 2,
**caractérisé en ce que**
l'appareil de maintien (9) est monté sur la carrosserie (2) des deux côtés de celle-ci.

4. Véhicule automobile selon la revendication 1 ou 2,
**caractérisé en ce que**
l'appareil de maintien (9) est monté sur la carrosserie (2) sur un seul côté de celle-ci.

5. Véhicule automobile selon l'une quelconque des revendications 1 à 4,
**caractérisé en ce que**
l'agrégat d'entraînement (5) est un moteur électrique.

6. Véhicule automobile selon l'une quelconque des revendications 1 à 5,
**caractérisé en ce que**
seul un essieu (4) du véhicule automobile est entraîné.

7. Véhicule automobile selon l'une quelconque des revendications 1 à 6,
**caractérisé en ce que**
seul l'essieu arrière (4) du véhicule automobile est entraîné.

8. Véhicule automobile selon la revendication 1,
**caractérisé en ce que**
au moins deux essieux (3,4) du véhicule automobile sont entraînés.
